Europäisches Patentamt

European Patent Office

Office européen des brevets

(11) Veröffentlichungsnummer: **0 019 815**
**B1**

(12) **EUROPÄISCHE PATENTSCHRIFT**

(19)

(12)

(45) Veröffentlichungstag der Patentschrift:
20.07.83

(21) Anmeldenummer: 80102732.7

(22) Anmeldetag: 16.05.80

(51) Int. Cl.³: **H 02 K 3/34**, H 02 K 3/38

(54) Wicklung für elektrische Maschinen.

(30) Priorität: **31.05.79 DE 2922272**

(43) Veröffentlichungstag der Anmeldung:
**10.12.80 Patentblatt 80/25**

(45) Bekanntmachung des Hinweises auf die Patenterteilung:
**20.07.83 Patentblatt 83/29**

(84) Benannte Vertragsstaaten:
**CH FR GB LI SE**

(56) Entgegenhaltungen:
**DE-A-1 488 729**
**DE-A-1 665 865**
**DE-C-463 375**
**GB-A-606 216**
**GB-A-1 339 821**
**US-A-3 079 519**
**US-A-3 202 558**
**US-A-4 020 375**

(73) Patentinhaber: **SIEMENS AKTIENGESELLSCHAFT,**
**Berlin und München Wittelsbacherplatz 2,**
**D-8000 München 2 (DE)**

(72) Erfinder: **Rotter, Hans-Werner, Dipl.-Met.,**
**Akazienstrasse 4, D-8501 Wendelstein (DE)**
Erfinder: **Eckbauer, Leopold,**
**Sigmund-Schuckert-Strasse 62, D-8501 Leerstetten (DE)**

Wicklung für elektrische Maschinen

Die Erfindung betrifft eine Wicklung für elektrische Maschinen nach dem Oberbegriff des Patentanspruchs 1.

Solche Wicklungen, wie sie insbesondere für Stabwicklungen von Gleichstrom- und Synchronmaschinen, für Schleifringläuferwicklungen oder für Hochspannungsständerwicklungen vorgesehen sind, werden mit Isolierbändern aus verschiedenartigen Materialien wie Papier, Folien und/oder Isolierstoffgeweben umbandelt bzw. umsponnen. Aus der DE-B-1 438 365 ist eine hochspannungsfeste Isolierung für die Nutteile von Wicklungen nach dem Oberbegriff des Patentanspruchs 1 bekannt, bei der auf die einzelnen blanken Profildrähte mit rechteckigem Querschnitt jeweils eine wärmebeständige Kunststoffolie aufgeschrumpft und diese von einer Einzelleiterisolierung aus Mineralstoffen und/oder Glimmerpapier in Verbindung mit härtbarem Schutzlack umgeben ist. Durch Verbacken der Schutzlacküberzüge der einzelnen Profildrähte und Umhüllung mehrerer zusammengehöriger, solcher einzeln isolierter, lückenlos nebeneinanderliegender Profildrähte durch eine Umpressung ergeben sich hochspannungsfeste Bündelleiter.

Ähnliche Bündelleiter sind auch aus der US-A-3 202 558 bekannt. Hierbei sind die einzelnen Profilleiter mit rechteckförmigem Querschnitt mit Leiterisolierungen allein aus Harzverbindungen oder mit harzgetränkten äusseren Umhüllungen aus anorganisch-organischen bzw. allein anorganischen Werkstoffen in nicht näher beschriebener bekannter Weise versehen. Die nebeneinanderliegenden gebündelten Profilleiter (Bündelleiter) sind jeweils in abwechselnder Wickelrichtung mit Isolierbändern überlappend umwickelt, wobei die Überlappungsstellen bei den einzelnen Bündelleitern an den aneinanderliegenden Flächen jeweils übereinanderliegen. Die so bandisolierten Bündelleiter sind ferner noch mit einer gemeinsamen, äusseren, bandförmigen Grundisolierung (Umpressung) umwickelt. Die Umhüllung der einzelnen Profilleiter kann z.B. gemäss der vorgenannten oder auch der nachfolgend beschriebenen Art ausgebildet sein.

Aus der DE-A-2 126 853 ist eine platzsparende Wicklung aus einzeln isolierten Profildrähten mit rechteckigem Querschnitt bekannt, bei der die lackisolierten Profildrähte jeweils eng von aneinanderstossenden Isolierbändern einlagig umgeben und eng aneinanderliegend zu Bündelleitern zusammengefasst sind und die Stossfugen längs der Isolierbandkanten an den einander zugewandten Seiten benachbarter Profildrähte gegeneinander versetzt liegen. Die Profilleiter sind hierbei nicht in Längsrichtung fortlaufend umwickelt, sondern von mindestens einem dem Umfang jedes Profilleiters entsprechend breiten Isolierband in Längsrichtung umhüllt, bei dem die parallelen Längskanten des Isolierbandes parallel zur Längsrichtung des Profilleiters liegen.

Diese Art der Leiterisolierung ist bei der Anbringung mit zunehmender Leiterlänge schwieriger vorzunehmen, da an die Masshaltigkeit der Bandbreite der Isolierbänder und der Profildrähte sowie an die exakte Stossfugenbildung bei hohlraumfreien Anliegen hohe Anforderungen gestellt werden, die sich noch erhöhen, wenn jeder Profildraht von zwei aneinanderstossenden Isolierbändern umhüllt werden soll, wie es die bevorzugte Ausführungsform zeigt.

Für die Isolierung einzelner Leiterstäbe mit rundem Querschnitt ist es aus der DE-C-463 375 bekannt, auf den mit einer Schicht aus saugfähigem Faserstoff versehenen Leiterstab einlagig und mit den sich schräg um den Umfang des Leiterstabes windenden Kanten aneinanderstossend mit einem Band eng zu umwickeln und ihn danach mit Isoliermasse zu tränken, so dass sich eine glatte Oberfläche der Isolierung des Leiterstabes ergibt, die das Einführen des Leiterstabes in seine Nut erleichtern und Beschädigungen beim Einführen vermeiden soll. Die Spannungsfestigkeit dieser Isolierung ist in der Hauptsache von dem tränkenden Isoliermittel begrenzt und auch für höhere andere Beanspruchungen thermischer, mechanischer und sonstiger physikalischer Art nicht ausreichend, zumal bei Nebeneinanderliegen mehrerer derartiger isolierter runder Leiterstäbe, abgesehen von den Hohlräumen, die Stossfugen der Leiterisolierungen von benachbarten Leiterdrähten sich überschneiden würden, was zu einer zusätzlichen Minderung der Isoliereigenschaften beitragen würde.

Der Erfindung liegt die Aufgabe zugrunde, eine Wicklung der eingangs genannten Art zu schaffen, deren Profildrähte bei Verwendung an sich bekannter spannungsfester Isolierbänder einfach und sicher einlagig isoliert werden können.

Die Lösung der Aufgabe gelingt durch die Massnahmen nach dem Kennzeichen des Patentanspruchs 1.

Eine besonders vorteilhafte Ausgestaltung der Erfindung ist Gegenstand eines abhängigen Anspruches.

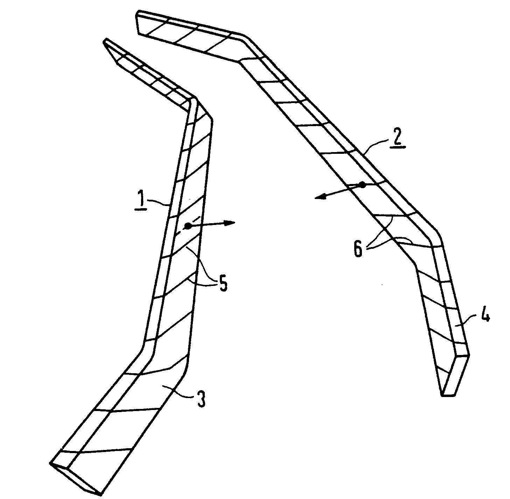

In der Zeichnung ist die Erfindung schematisch und für zwei auseinandergezogene, betriebsmässig nebeneinanderliegende Profildrähte (aus einer Wicklung mit mehreren solcher Profildrähte) angedeutet. Die beiden Profildrähte 1, 2 sind mit spannungsfesten Isolierbändern 3 und 4 jeweils einlagig und mit den Kanten aneinanderstossend umwickelt, wobei der Profildraht 1 rechtsgängig, der benachbarte Profildraht linksgängig umwickelt ist. Die Stossfugen 5 auf der einen Seite des Isolierbandes 3 liegen dabei jeweils zwischen zwei benachbarten Stossfugen 6 der zugewandten Seite des Isolierbandes 4 und umgekehrt. Es ist besonders vorteilhaft, wenn die Stossfugen jeweils in der Mitte zwischen zwei Stossfugen am benachbarten Profildraht anliegen.

Als spannungsfeste Isolierbänder können solche mit besonderem Vorteil vorgesehen werden, wie sie aus der DE-C-1 665 865 bekannt sind. Mit solchen Isolierbändern kann eine platzsparende Leiterisolierung von insgesamt weniger als 130 μ Dicke mit hoher thermischer und elektrischer Festigkeit bei hoher Feuchtigkeitsbeständigkeit und leichter Biegeverarbeitung erhalten werden, die eine Durchschlagsfestigkeit zwischen den Profilleitern bis zu einigen kV erreicht.

### Patentansprüche

1. Wicklungen für elektrische Maschinen aus von Isolierbändern (3, 4) eng umwickelten und zu Bündelleitern eng aneinanderliegend zusammengefassten Profildrähten (1, 2), dadurch gekennzeichnet, dass die Isolierbänder einlagig mit den Kanten aneinanderstossend fortlaufend um die einzelnen Profildrähte gewickelt sind, dass nebeneinanderliegende Profildrähte gegensinnig bewickelt sind und dass die Stossfugen (5, 6) längs der Isolierbandkanten auf den einander zugewandten Seiten benachbarter Profildrähte gegeneinander versetzt angeordnet sind.

2. Wicklung nach Anspruch 1, dadurch gekennzeichnet, dass die Stossfugen (5, 6) jeweils der Isolierbandmitte des benachbarten Profildrahtes gegenüberliegen.

### Claims

1. Winding for electrical machines consisting of pre-formed conductors (1, 2) tightly wound with insulating tapes (3, 4) and combined to form bundle conductors lying closely side by side, characterised in that the insulating tapes are wound round the individual pre-formed conductors in a single layer with the edges continuously abutting, in that adjacent pre-formed conductors are wound in opposite directions and in that the seams (5, 6) are arranged to be mutually staggered along the insulating tape edges on the sides of adjacent pre-formed conductors that are facing one another.

2. Winding according to claim 1, characterised in that the seams (5, 6) lie respectively opposite the centre of the insulating tape of the adjacent pre-formed conductor.

### Revendications

1. Enroulement pour machines électriques, constitué par des fils profilés (1, 2) enroulés de façon serrée par des bandes isolantes (3, 4) et assemblés en conducteurs en faisceaux suivant un jointoiement serré, caractérisé par le fait que les rubans isolants sont enroulés, de façon continue, sur les différents fils profilés, suivant une couche unique et avec leurs bords jointifs, que des fils profilés jointifs sont enroulés dans des sens opposés et que les jointures aboutées (5, 6) sont, le long des bords des rubans isolants et sur les côtés voisins des fils profilés voisins, disposés avec un décalage réciproque.

2. Enroulement selon la revendication 1, caractérisé par le fait que les jointures aboutées (5, 6) sont chacune situées en face du milieu du ruban isolant du profilé voisin.